# EUROPÄISCHE PATENTSCHRIFT

(11) **EP 0 723 029 B1**
(45) Veröffentlichungstag und Bekanntmachung des Hinweises auf die Patenterteilung: **24.06.1998**
(21) Anmeldenummer: 95115008.5
(22) Anmeldetag: 23.09.1995
(51) Int. Cl.: C22C 19/05, C01B 17/60

(54) **Nickellegierung**
Nickel alloy
Alliage à base de nickel

(30) Priorität: 23.12.1994 DE 4446266
(43) Veröffentlichungstag der Anmeldung: 24.07.1996
(73) Patentinhaber: Krupp VDM GmbH, 58791 Werdohl (DE)
(72) Erfinder: Heubner, Ulrich, Dr.-Ing., D-58791 Werdohl (DE); Kirchheiner, Rolf, Dipl.-Ing., D-58644 Iserlohn (DE); Köhler, Michael, Dr.-Ing., D-58638 Iserlohn (DE)
(74) Vertreter: Cohausz & Florack

(56) Entgegenhaltungen:
- EP-A- 0 558 915
- EP-A- 0 563 720
- US-A- 3 649 255
- CHEMICAL ABSTRACTS, Bd. 111, Nr. 1, 01 Januar 1990, Columbus, Ohio, US; Zusammenfassung Nr. 579246, & JP-A-1 116 046

## Beschreibung

Die Erfindung betrifft eine Nickellegierung mit verbesserter Korrosionsbeständigkeit, insbesondere gegenüber sauren, sauerstoffarmen Medien, wie sie z.B. in Rauchgas-Entschwefelungsanlagen auftreten.

Aus der EP-A-0 334 410 sind eine Reihe korrosionsbeständiger Nickellegierungen mit Molybdän und Chrom als den Hauptlegierungsbestandteilen bekannt geworden, und zwar solche mit (alle Angaben in Masse-%): 14 bis 26 % Chrom, 3 bis 18 % Molybdän; 14,5 bis 23 % Chrom, 14 bis 17 % Molybdän; 20 bis 24 % Chrom, 12 bis 17 % Molybdän, 2 bis 4 % Wolfram, 2 bis 8 % Eisen; 22 bis 24 % Chrom, 15 bis 16,5 % Molybdän. Diese Legierungen finden insbesondere in der Chemie-Industrie und in der Umwelttechnik Anwendung, wo so aggressive Korrosionsbedingungen vorliegen, daß hochlegierte Stähle keine hinreichende Korrosionsbeständigkeit mehr aufweisen. Trotz des weiten für die letztgenannte Legierung in EP-A-0 334 410 beschriebenen Verwendungsumfangs haben jüngste Erfahrungen aus der Rauchgas-Entschwefelung gezeigt, daß es dort in zunehmendem Umfang Bedingungen gibt, denen die bekannten Nickel-Chrom-Molybdän-Legierungen in ihrer Korrosionsbeständigkeit nicht genügen. Das sind die sehr sauren und zugleich oxidationsmittelarmen Bereiche hoher Chloridionen-Konzentration, welche sich bei der Rauchgas-Naßentschwefelung, insbesondere unter Ablagerungen und Verkrustungen von Gips, ausbilden können. Ein weiterer Problemfall sind die Wärmeverschiebungssysteme von Rauchgas-Entschwefelungsanlagen. Auch die Wiederaufarbeitung technischer Schwefelsäure wird z.T. unter extrem oxidationsmittelarmen Bedingungen durchgeführt. Die bekannten chromlegierten metallischen Werkstoffe geraten dort mit dem Ergebnis eines unzulässig hohen Korrosionsabtrags außerhalb ihres Passivbereichs. Für Behälter und Rohrleitungen müssen nach dem Stand der Technik dort deshalb Werkstoffe, wie Grafit, verwendet werden, welche im Vergleich zu metallischen Werkstoffen die Nachteile mangelnder Duktilität und fehlender Schweißbarkeit aufweisen. Auch metallene Werkstoffe auf Nickelbasis in der Regel mit 26 bis 30 % Molybdän und bis zu 7 % Eisen und bis zu 1,5 % Chrom, welche bisher ausschließlich für die Handhabung stark reduzierender Säuren entwickelt worden sind, haben sich für derartige Anwendungen nicht bewährt.

Die US-PS 4 861 550 offenbart in Ergänzung hierzu auch Nickellegierungen mit 25 bis 35 % Molybdän, 2 bis 8 % Eisen, 0,3 bis 2 % Aluminium, 0,1 bis 4 % wenigstens eines der Elemente Vanadium, Wolfram, Chrom und Kupfer sowie ggf. noch 0,5 bis 5 % Kobalt und weitere Beimengungen an Bor, Kalzium, Titan, Zirkonium, Niob und Yttrium. Auch ihre Korrosionsbeständigkeit erweist sich in einigen Fällen als unzureichend.

Weitere korrosionsbeständige Nickel-Molybdän-Chrom Legierungen sind in US-A-3649255, EP-A-0563720 und EP-A-0558915 beschrieben.

Aufgabe der vorliegenden Erfindung ist es deshalb, einen metallischen Werkstoff vorzuschlagen, der auch unter den vorerwähnten verschärften Bedingungen eine ausreichend angepaßte Korrosionsbeständigkeit besitzt.

Diese Aufgabe wird erfindungsgemäß durch eine Nickellegierung gelöst, die aus (in Masse-%):

| | |
|---|---|
| 20,5 bis 25 | % Molybdän |
| 5 bis 11,5 | % Chrom |
| > 5 bis 8 | % Eisen |
| 0,1 bis 0,6 | % Mangan |
| 0,1 bis 0,3 | % Vanadium |
| 0,1 bis 0,5 | % Aluminium |
| 0 bis 0,3 | % Silizium |
| 0 bis 0,5 | % Kupfer |
| 0 bis 0,1 | % Kohlenstoff |
| 0 bis 1 | % Kobalt |
| Wahlweise nach: | |
| 0.001 - 0.04 | % Magnesium und |
| 0.001 - 0.01 | % Kalzium |

sowie den üblichen herstellungsbedingten Beimengungen an Begleitelementen, wie Phosphor und Schwefel, Rest Nickel, besteht.

Die Erfindung wird anhand der nachfolgenden Beispiele im einzelnen erläutert.

Eine Reihe von Versuchen wurde mit Nickellegierungen der in Tabelle 1 angegebenen Zusammensetzungen durchgeführt. Sie ließen sich durch Warm- und abschließende Kaltverformung problemlos zu Blechen verformen. Diese wurden abschließend 30 min bei 1190 °C lösungsgeglüht, so daß ein gleichmäßig rekristallisiertes Gefüge vorlag. Die Legierungen Nr. 1 und Nr. 2 entsprechen dem Stand der Technik. Bei ihnen handelt es sich um die Nickel-Chrom-Molybdän-Legierung Alloy C-276 (Deutsche Werkstoff-Nr. 2.4819) und um die Nickel-Chrom-Molybdän-Legierung Alloy 59 (Deutsche Werkstoff-Nr. 2.4605). Die Legierungen Nr. 3 und Nr. 4 sind zwei Beispiele für den erfindungsgemäßen Werkstoff.

Diese Legierungen wurden vergleichend auf ihre Korrosionsbeständigkeit geprüft in Medien, welche dem Bereich der reduzierenden und schwach oxidierenden Korrosionsbedingungen angehören. Gemäß den bevorzugten Einsatzbedingungen für die erfindungsgemäße Legierung wurde hierfür eine Simulatlösung der Rauchgas-Entschwefelung ausgewählt. Diese ist eine auf einen pH-Wert von 1 eingestellte wäßrige Schwefelsäurelösung mit Zusatz von 7 % Chloridionen und 0,01 % Fluoridionen sowie 15 % bei der Rauchgas-Entschwefelung anfallendem Gips. Die Prüfung der Versuchslegierungen in dieser Lösung erfolgte über 30 Tage bei 100 °C unter Abdeckung der gerührten Lösung mit Stickstoff. Damit werden erfahrungsgemäß die sehr sauren und zugleich sauerstoffarmen Verhältnisse hoher Chloridionen-Konzentration, die sich bei der Rauchgas-Naßentschwefelung in konstruktiv bedingten Spalten und unter Ablagerungen und Verkrustungen von Gips ausbilden, gut nachgeahmt.

Die Oberflächen der Prüflinge waren zuvor mit Körnung 120 geschliffen worden. Geprüft wurde sowohl auf gleichmäßige Flächenkorrosion als auch auf Spaltkorrosion. Hierfür waren, wie in "Werkstoffe und Korrosion", Bd. 37, 1986, S. 183-190, im einzelnen beschrieben, PTFE-Spaltblöcke angefertigt und mit einem Drehmoment von 3 Ncm auf den Oberflächen befestigt worden. Die Ergebnisse sind in Tabelle 2 wiedergegeben. Man erkennt, daß die Flächenkorrosion der erfindungsgemäßen Legierungen Nr. 3 und Nr. 4 gegenüber den zum Stand der Technik gehörenden Legierungen Nr. 1 und Nr. 2 etwas erhöht ist, jedoch noch hinreichend niedrig ist, um die Legierungen als beständig anzusehen. Maßgebend ist die Spaltkorrosion. Trotz des vergleichsweise geringen Flächenkorrosionsabtrags von nur 0,029 und 0,006 mm/Jahr erreicht die Spaltkorrosion in den zum Stand der Technik gehörenden Legierungen Nr. 1 und Nr. 2 schon nach nur 30 Tagen Tiefen von bis zu 0,17 mm. Das führt alsbald zur örtlichen Perforierung der Wandungen und damit zu einer Funktionsbeeinträchtigung der gesamten Anlage. Die erfindungsgemäßen Legierungen Nr. 3 und Nr. 4 sind dagegen frei von jeglichen Anzeichen derartiger Spaltkorrosion. Damit wird der Bau metallischer, wartungsarmer Komponenten möglich, die derzeit von den Betreibern noch als Verschleißteile mit wenigen Monaten Standzeit konzipiert werden.

Gemäß den bevorzugten Einsatzbedingungen der erfindungsgemäßen Legierung wurden als weitere Prüflösungen 70 %-ige Schwefelsäure bei 120 °C und 80 %-ige Schwefelsäure bei 125 °C ausgewählt. Diese Schwefelsäure-Konzentrationsbereiche und -temperaturen entsprechen konkreten Einsatzbedingungen in Wärmeverschiebungssystemen von Rauchgas-Entschwefelungsanlagen. Die Aussagen aus derartigen Prüfbedingungen ergeben auch Anhaltspunkte für die voraussichtliche Bewährung bei der Wiederaufarbeitung von Abfallschwefelsäure (30 bis 90 Masse-%) unter reduzierenden Bedingungen. Die Ergebnisse der vergleichenden Prüfung sind in Tabelle 3 wiedergegeben. Man erkennt, daß die dem Stand der Technik zugehörenden Legierungen Nr. 1 und Nr. 2 dort so hohe Abtragsraten aufweisen, daß ihre Verwendung nicht in Betracht gezogen werden kann. Die erfindungsgemäßen Legierungen Nr. 3 und Nr. 4 sind aufgrund ihrer viel geringeren Abtragsverluste dagegen verwendbar.

Die Verwendung der erfindungsgemäßen Legierung in der Handhabung, Transport und Lagerung von Mischungen oxidationsmittelhaltiger anorganischer Säuren, wie sie typischerweise in Metallbeizereien verwendet werden, ist beispielhaft in der Tabelle 4 beschrieben. Wegen der enormen Aggressivität dieser Beizsäuren bei höheren Temperaturen werden bislang metallische Komponenten als Verschleißteile betrachtet und bei Korrosionsgeschwindigkeiten von > 5 mm/a, siehe Legierung 1 und 2, regelmäßig ausgewechselt.

Wie man Tabelle 4 entnimmt, bieten die erfindungsgemäßen Legierungen und von diesen insbesondere die Nr. 3 hier den Vorteil wesentlich verlängerter Haltbarkeit.

Der Gehalt der erfindungsgemäßen Legierung von mehr als 5 bis 8 % Eisen ermöglicht einmal eine kostengünstige Herstellung auf der Basis von Rücklaufschrott aus der Fertigung der für die Umwelttechnik in verhältnismäßig großen Mengen anfallenden und zum Stand der Technik gehörenden Legierung Nr. 1 (in Tabelle 1), zum anderen läßt sich damit die Eisenaufmischung bei der schweißtechnischen Verarbeitung der aus Kostengründen zunehmend bevorzugten Walzplattierverbunde aus einer dünnen Auflage aus Nickelbasis-Legierung auf Trägerblech aus Kohlenstoffstahl leichter beherrschen.

In einer weiteren Ausgestaltung enthält die erfindungsgemäße Nickellegierung (in Masse-%) 0,001 bis 0,04 % Magnesium und 0,001 bis 0,01 % Kalzium, um eine gute, d.h. rißfreie Warmverarbeitbarkeit zu gewährleisten.

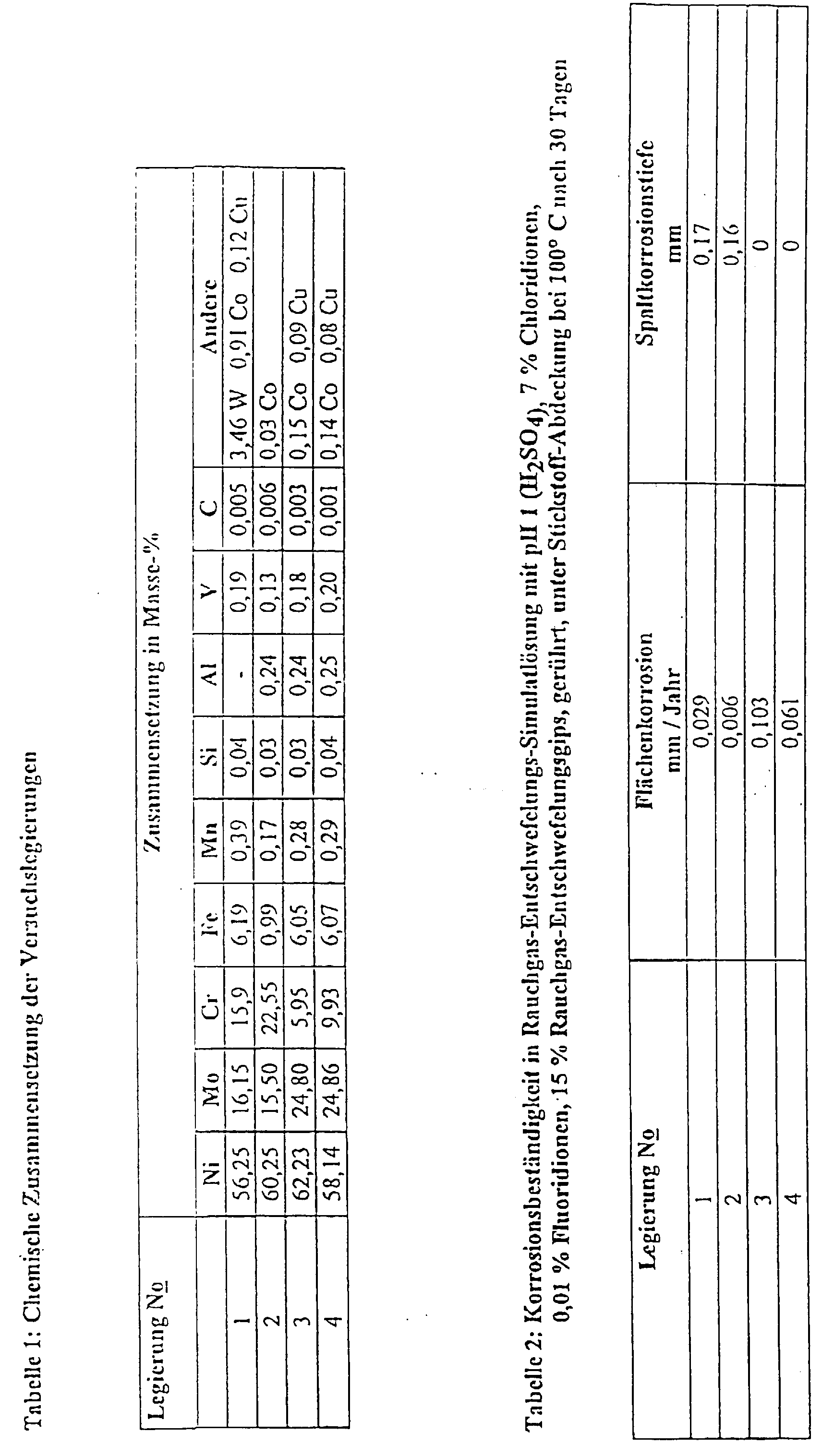

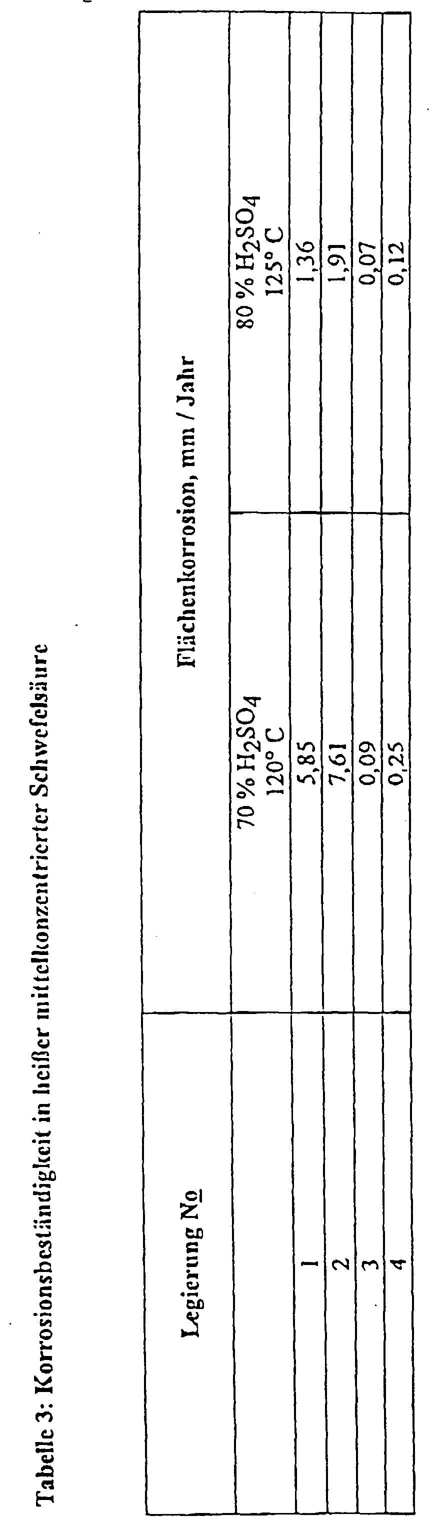

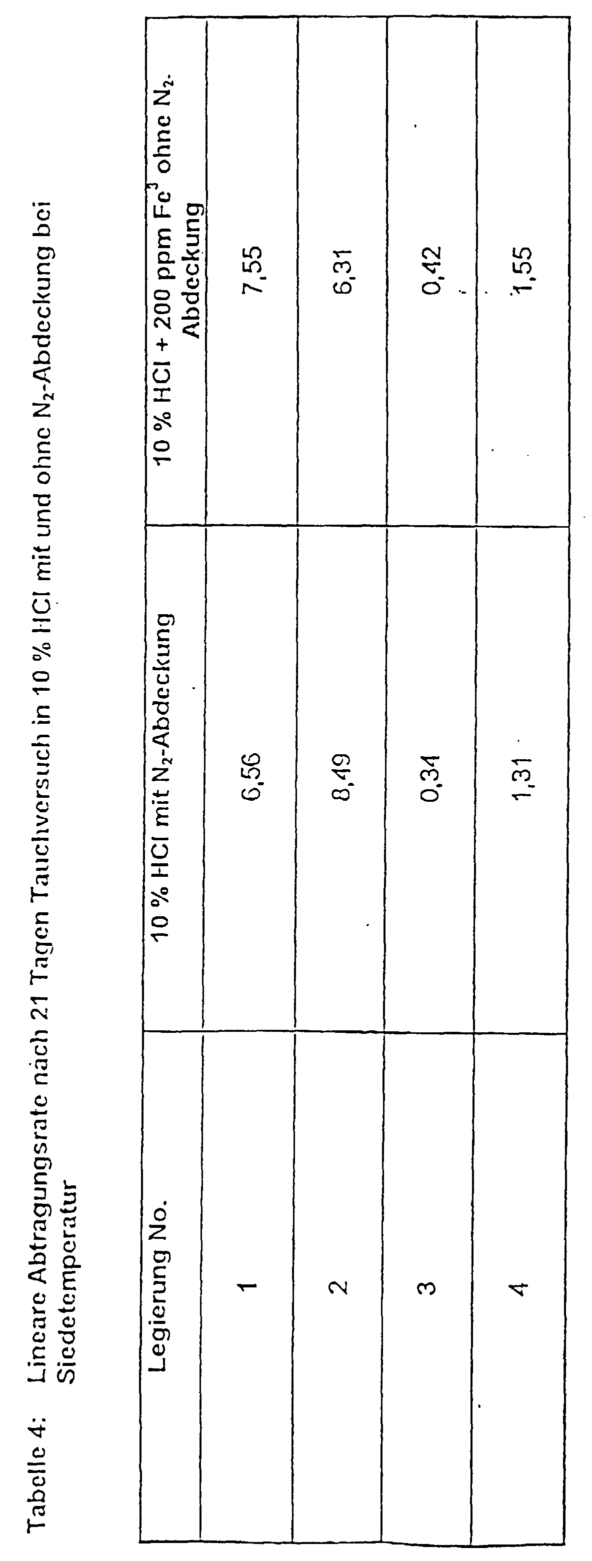

## Patentansprüche

1. Nickellegierung mit verbesserter Korrosionsbeständigkeit, insbesondere gegenüber sauren und zugleich sauerstoffarmen Medien, bestehend aus (in Masse-%):
| | |
|---|---|
| 20,5 bis 25 | % Molybdän |
| 5 bis 11,5 | % Chrom |
| > 5 bis 8 | % Eisen |
| 0,1 bis 0,6 | % Mangan |
| 0,1 bis 0,3 | % Vanadium |
| 0,1 bis 0,5 | % Aluminium |
| 0 bis 0,3 | % Silizium |
| 0 bis 0,5 | % Kupfer |
| 0 bis 0,1 | % Kohlenstoff |
| 0 bis 1 | % Kobalt |
| Wahlweise nach: | |
| 0.001 bis 0.04 | % Magnesium |
| 0.001 bis 0.01 | % Kalzium, |
mit den üblichen herstellungsbedingten Beimengungen an Begleitelementen, wie Phosphor und Schwefel, Rest Nickel.

2. Nickellegierung nach Anspruch 1, die zusätzlich (in Masse-%)
| | |
|---|---|
| 0,001 bis 0,04 | % Magnesium und |
| 0,001 bis 0,01 | % Kalzium |
enthält.

3. Verwendung einer Nickellegierung nach Anspruch 1 oder 2,
für Bauteile von Rauchgas-Entschwefelungsanlagen oder Wiederaufarbeitungsanlagen für Abfall-Schwefelsäure oder von Mischungen anorganischer Säuren, wie sie z.B. bei Metallbeizprozessen anfallen.

## Claims

1. A nickel alloy having improved resistance to corrosion, more particularly in relation to acid and simultaneously low-oxygen media and which consists of (in % by weight):
| | |
|---|---|
| 20.5 to 25 | % molybdenum |
| 5 to 11.5 | % chromium |
| > 5 to 8 | % iron |
| 0.1 to 0.6 | % manganese |
| 0.1 to 0.3 | % vanadium |
| 0.1 to 0.5 | % aluminium |
| 0 to 0.3 | % silicon |
| 0 to 0.5 | % copper |
| 0 to 0.1 | % carbon |
| 0 to 1 | % cobalt |
| optional furthermore | |
| 0.001 to 0.04 | % magnesium and |
| 0.001 to 0.01 | % calcium |
with the usual unavoidable impurities like phosphorus an sulphur, balance nickel.

2. Nickel alloy according to claim 1, containing additionally (in % by weight)
| | |
|---|---|
| 0.001 to 0.04 | % magnesium and |
| 0.001 to 0.01 | % calcium. |

3. Use of a nickel alloy according to claim 1 or 2 for constructional parts for smoke gas desulphurization plants or reprocessing plants of waste sulphuric acid or of mixtures of inorganic acids such as are typically produced in metal pickling processes.

## Revendications

1. Alliage à base de nickel ayant une résistance améliorée contre la corrosion, notamment vis-à-vis des milieux acides et en même temps pauvres en oxygène, consistant en (en % de masse) :
| | |
|---|---|
| 20,5 à 25 | % de molybdène |
| 5 à 11,5 | % de chrome |
| > 5 à 8 | % de fer |
| 0,1 à 0,6 | % de manganèse |
| 0,1 à 0,3 | % de vanadium |
| 0,1 à 0,5 | % d'aluminium |
| 0 à 0,3 | % de silicium |
| 0 à 0,5 | % de cuivre |
| 0 à 0,1 | % de carbone |
| 0 à 1 | % de cobalt |
| au choix encore : | |
| 0,001 à 0,04 | % de magnésium |
| 0,001 à 0,01 | % de calcium. |
avec des impuretés usuelles d'éléments d'accompagnement dues à la fabrication tels que le phosphore et le soufre, le reste du nickel.

2. Alliage à base de nickel selon la revendication 1, contenant en supplément (en % de masse)
| | |
|---|---|
| 0,001 à 0,04 | % de manganèse et |
| 0,001 à 0,01 | % de calcium. |

3. Utilisation d'un alliage à base de nickel selon la revendication 1 ou 2, pour des éléments de construction d'installations pour désulfurer des fumées ou d'installations de recyclage de l'acide sulfurique résiduaire ou de mélanges d'acides inorganiques, tels qu'ils sont produits lors de procédés de décapage de métal.
